# EUROPEAN PATENT APPLICATION

(11) **EP 2 327 342 A1**
(43) Date of publication of application: **01.06.2011**
(21) Application number: 09177102.2
(22) Date of filing: 25.11.2009
(51) Int. Cl.: A47J 37/06

(54) **Low-oil fryer and heating cover thereof**

(71) Applicant: Tall & Stout Industrial Corp., Banchiau City Taipei 220 (TW)
(72) Inventor: Chang, Kuei-Tang, 220, Banchiau City, Taipei (TW)
(74) Representative: 2K Patentanwälte Blasberg Kewitz & Reichel

(57) **Abstract**

The present invention relates to a low-oil fryer (1) and a heating cover (10) thereof. The heating cover (10) includes: a cover body (11), an actuator (12), a heater (15), and a speed-reducing mechanism (14). The actuator (12) is mounted inside the cover body (11) and has a driving shaft (121). The heater (15) is mounted below the actuator (12) and has a partitioning disk (151) connected to the cover body (11) and a heating element (152) fixed to the partitioning disk (151). The speed-reducing mechanism (14) is disposed on the partitioning disk (151) and has a speed-reducing gear set (142) rotatably driven by the driving shaft (121) and a transmission shaft (143) rotatably driven by the speed-reducing gear set (142). The transmission shaft (143) is detachably assembled with a stirring member (30) for stirring food materials in pot (20). The present invention is simple in structure, easy to operate and clean, and efficient in reducing the accumulation of oil on the internal components. Thus, the lifetime thereof can be extended.

## Description

### BACKGROUND OF THE INVENTION

### 1. Field of the Invention

The present invention relates to a low-oil fryer, and in particular to a low-oil fryer having a heating cover.

### 2. Description of Prior Art

With the advancement of science and technology, various kinds of novel electric products are proposed for cooking utensils to replace the traditional cooking means, a gas oven, whereby people can feel more convenient in cooking.

For example, there has been a low-oil fryer including an outer pot, an inner pot received in the outer pot, a motor mounted below the inner pot, a stirring blade protruding from the bottom surface of the inner pot and rotatably driven by the motor, a hot-air generator disposed outside the inner pot, and a cover covering the outer pot. The hot-air generator generates high-temperature airflow and blows the high-temperature airflow into the inner pot. With little amount of oil, the food materials received in the inner pot can be cooked deeply by means of the high-temperature airflow and the stirring action of the stirring blade.

However, in practice, such a low-oil fryer has problems as follows. First, the whole structure is complicated. Since the motor is mounted below the inner pot, a speed-reducing mechanism has to be additionally connected to the motor for driving the stirring blade. Further, since the hot-air generator is located outside the inner pot, partitions or channels have to be provided for guiding the airflow from the hot-air generator into the inner pot. As a result, the whole volume of the low-oil fryer and its occupied space are inevitably increased, which may restrict the available volume of the inner pot and the allowable amount of food materials received in the inner pot.

Second, such a low-oil fryer utilizes the high-temperature airflow to cook the food materials, so that intake channels and venting channels have to be provided, which not only complicates the whole structure, but also increases the difficulty in cleaning the inner pot and the outer pot.

Third, the vented airflow contains oil, so that the oil may be accumulated on the components in the fryer through the venting channels or other apertures. As a result, the components may suffer damage, reducing the lifetime of the low-oil fryer.

Therefore, it is an important issue for the present Inventor to solve above-mentioned problems.

### SUMMARY OF THE INVENTION

The present invention is to provide a low-oil fryer, which is simple in structure, easy to operate and clean, and efficient in reducing the accumulation of oil on the internal components. Thus, the lifetime thereof can be extended.

The present invention is to provide a heating cover of a low-oil fryer, which includes: a cover body; an actuator mounted inside the cover body and having a driving shaft; a heater mounted below the actuator, the heater comprising a partitioning disk connected to the cover body and a heating element fixed to the partitioning disk; and a speed-reducing mechanism disposed on the partitioning disk, the speed-reducing mechanism comprising a speed-reducing gear set rotatably driven by the driving shaft and a transmission shaft rotatably driven by the speed-reducing gear set.

The present invention is to provide a low-oil fryer, which includes: a pot having an accommodating chamber and an opening formed atop the accommodating chamber; a heating cover covering the opening of the pot, the heating cover including: a cover body; an actuator mounted inside the cover body and having a driving shaft; a heater mounted below the actuator, the heater comprising a partitioning disk connected to the cover body and a heating element fixed to the partitioning disk; and a speed-reducing mechanism disposed on the partitioning disk, the speed-reducing mechanism comprising a speed-reducing gear set rotatably driven by the driving shaft and a transmission shaft rotatably driven by the speed-reducing gear set; and a stirring member disposed in the accommodating chamber and rotatably driven by the transmission shaft.

In comparison with prior art, the present invention has advantageous features as follows.

Since the heater of the heating cover is configured to heat up the food materials in the pot directly rather than using high-temperature airflow, no hot-air generator or air-blowing blade is to be provided. Also, the actuator and the speed-reducing mechanism are provided in the cover body rather than outside the pot, not only the structure of the pot is simplified, but also the internal volume of the pot is enlarged.

Since the present invention only includes three separate parts—the heating cover, the pot and the stirring member, and the heating cover has the partitioning disk for separating the cover body from the pot and preventing the oil form splashing onto the internal components of the cover body, the user only needs to clean the pot, the stirring member and a portion of the heating cover, which simplifies the cleaning process after use.

Furthermore, the heater of the present invention has a partitioning disk, whereby the cover body, the actuator, the speed-reducing mechanism and other components inside the cover body can be separated from the pot. Thus, the oil may not splash into the cover body to contaminate the interior of the heating cover. Thus, the lifetime of the present invention can be extended.

### BRIEF DESCRIPTION OF THE DRAWINGS

FIG. 1 is an assembled perspective showing a low-oil fryer of the present invention;
FIG. 2 is an exploded perspective view showing a heating cover of the present invention;
FIG. 3 is an exploded perspective showing the heating cover and a pot of the present invention;
FIG. 4 is an assembled cross-sectional showing the low-oil fryer of the present invention;
FIG. 5 is an exploded perspective view showing a heating cover according to another embodiment of the present invention;
FIG. 6 is an exploded perspective view showing the heating cover, a stirring member and the pot according to another embodiment of the present invention;
FIG. 7 is an assembled cross-sectional showing the low-oil fryer according to another embodiment of the present invention; and
FIG. 8 is an assembled cross-sectional showing the low-oil fryer according to a further embodiment of the present invention.

### DETAILED DESCRIPTION OF THE INVENTION

The characteristics and technical contents of the present invention will be explained with reference to accompanying drawings. However, the drawings are illustrative only but not used to limit the present invention.

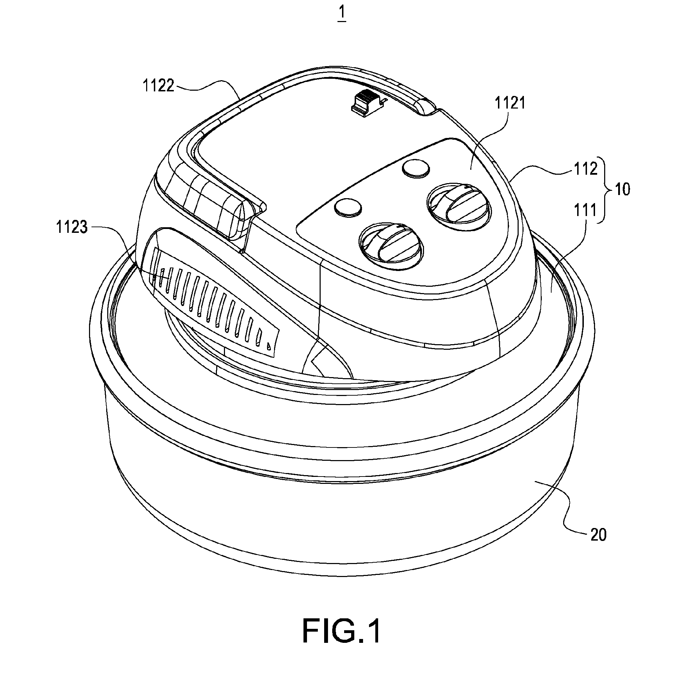

Please refer to FIGS. 1 to 4, which show a first embodiment of the present invention. The present invention provides a low-oil fryer and a heating cover thereof. The low-oil fryer 1 includes a heating cover 10, a pot 20 and a stirring member 30. As shown in FIG. 1, when in use, a user puts food materials in the pot 20 and combines the heating cover 10 with the stirring member 30. Then, the heating cover 10 together with the stirring member 30 covers the pot 20, so that the stirring member 30 can stir the food materials in the pot 20.

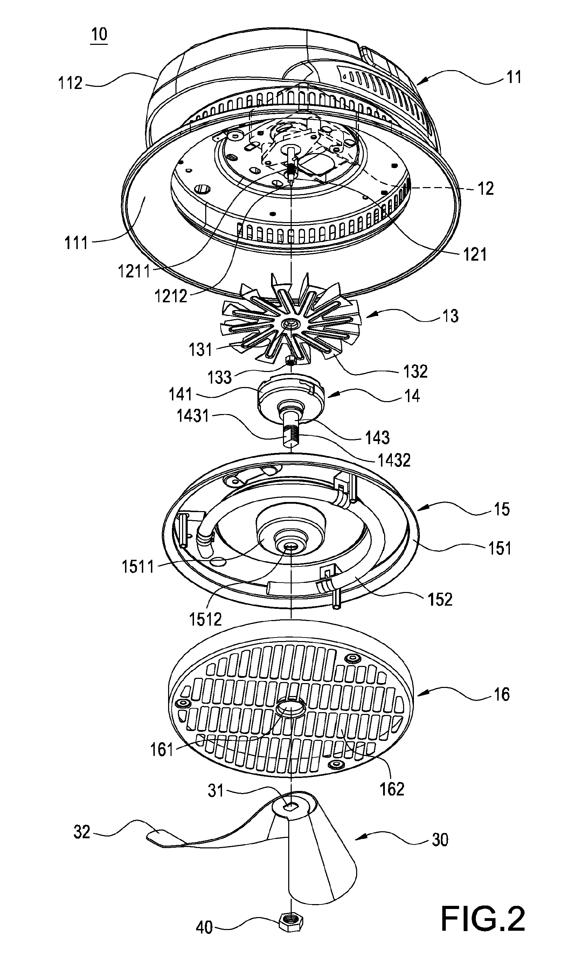

As shown in FIG. 2, the heating cover 10 includes a cover body 11, an actuator 12, a heat-dissipating impeller 13, a speed-reducing mechanism 14, a heater 15, and a protective plate 16.

The cover body 11 is constituted of a cover plate 111 and an operating portion 112 protruding from the cover plate 111. The cover plate 111 is formed into a circular shape and has a central opening. The cover plate 111 is used to cover the pot 20. The operating portion 112 (FIG. 1) is a hollow cylinder with an upper surface having an operating panel 1121 and a handle 1122. The operating panel 1121 has a plurality of buttons thereon for setting and controlling a desired temperature and a period of time during which the low-oil fryer 1 performs the heating action. The user can grip the handle 1122 to lift up the heating cover 10 or cover the heating cover 10 on the pot 20. The periphery of the operating portion 112 adjacent to the cover plate 111 is provided with a plurality of heat-dissipating holes 1123 for dissipating the heat generated by the actuator 12 and the heater 15 in the operating portion 112 to the outside.

The actuator 12 is mounted in the operating portion 112 of the cover 11. In the present embodiment, the actuator 12 is a motor. The actuator 12 has a driving shaft 121 protruding toward the cover plate 111. The middle section of the driving shaft 121 is provided with a pair of stopping pins and an outer thread 1211. A free end of the driving shaft 121 is formed with a driving key 1212 of a reduced diameter. The driving key 1212 has a positioning section (not shown) for positioning and driving the speed-reducing mechanism 14 connected thereto.

The heat-dissipating impeller 13 has a central through-hole 131 and a plurality of blades 132 extending outwards from the central through-hole 131 in a radial direction. With the driving shaft 121 passing through the central through-hole 131 until the pair of the stopping pins is abutted, a locking nut 133 is threadedly connected to outer thread 1222 on the middle section of the driving shaft 121, whereby the heat-dissipating impeller 13 can be fixed to the driving shaft 121 to rotate synchronously with the driving shaft 121. The profile of the blades 132 is configured to draw in external cold air into the cover body 11 through the heat-dissipating holes 1123 when the blades 132 are rotating. The airflow is vented through venting holes between the cover plate 111 and the operating portion 112, thereby dissipating the heat generated by the actuator 12 to the outside and keeping the working temperature of the actuator 12 in a normal range.

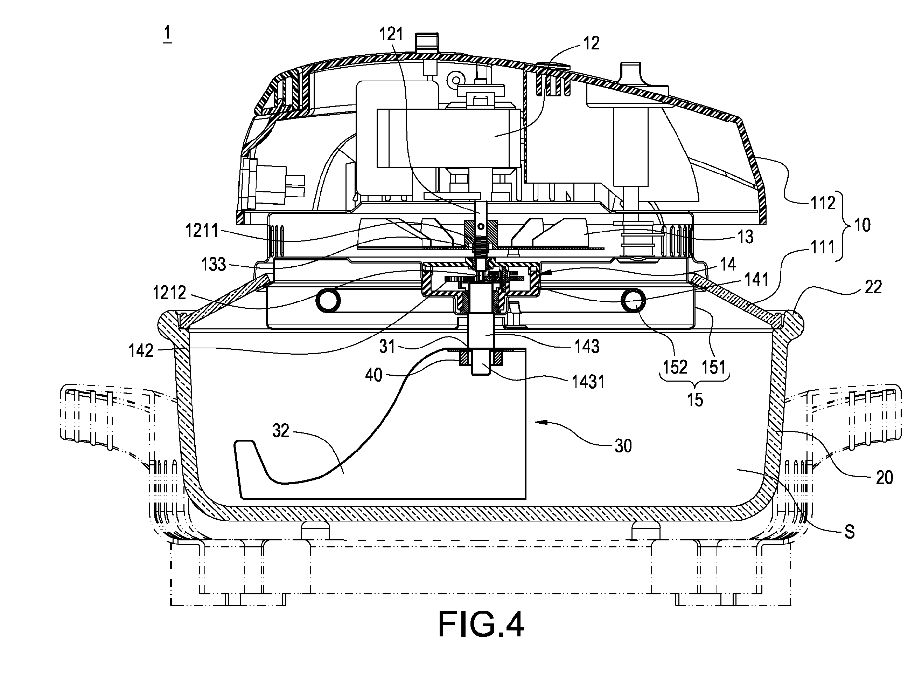

As shown in FIG. 4, the speed-reducing mechanism 14 comprises a casing 141, a speed-reducing gear set 142 located in the casing 141 and rotatably driven by the driving shaft 121, and a transmission shaft 143 rotatably driven by the speed-reducing mechanism gear set 142. The upper surface of the casing 141 has a central perforation (not shown) for allowing the driving shaft 121 to be inserted therein, so that the driving key 1212 at the distal end of the driving shaft 121 can drive the speed-reducing gear set 142 inside the casing 141 to rotate. The lower surface of the casing 141 also has a central perforation for allowing the transmission shaft 143 to protrude outside the casing 141. The speed-reducing gear set 142 is constituted of a plurality of gears and idle wheels of different diameters. The driving key 1212 of the driving shaft 121 is inserted into a shaft hole of one gear to drive this gear. The other gear is fixed to the transmission shaft 143. The shaft hole of each idle wheel is penetrated by a pivot. With the gear ratio between the gears and the idle wheels, a good speed-reducing effect can be achieved between the driving shaft 121 and the transmission shaft 143.

The heater 15 comprises a partitioning disk 151 and a heating element 152 fixed to the partitioning disk 151. The partitioning disk 151 is assembled to the inner edge of the cover plate 111 of the cover body 11 by screws. The center of the top surface of the partitioning disk 151 is formed with a trough 1511 for receiving the speed-reducing mechanism 14 and a through-hole 1512 for allowing the transmission shaft 143 to penetrate. In the present embodiment, the heating element 152 is a halogen heating pipe configured as a ring to correspond to the partitioning disk 151. Since the heating speed of the halogen heating pipe is very fast, it consumes less electricity than the conventional electric heating pipe. Further, the photo-thermal energy generated by the halogen heating pipe can be transmitted in three different ways including heat conduction, heat convection, and heat radiation, so that the oil distributed on the surfaces of the food materials can be heated up to a high temperature quickly. Further, the photo-thermal energy can penetrate the surfaces of the food materials to cook the food materials. In addition, the surface of the partitioning disk 151 reflects the photo-thermal energy generated by the heating element 152 to increase the heating efficiency. Thus, the heating efficiency of the heater 15 of the present invention utilizing a halogen heating pipe is much better than that of a conventional electric heater or hot-air heater.

The protective plate 16 is mounted under the bottom surface of the partitioning disk 152 of the heater 15, thereby protecting the heating element 152 from burning the user. The protective plate 16 is formed into a disk-like shape. The protective plate 16 has a central hole 161 for allowing the transmission shaft 143 to pass through and a plurality of meshes 162 provided on its surface. The photo-thermal energy generated by the heating element 152 can pass through the meshes 162 to heat up the food materials under the protective plate 16.

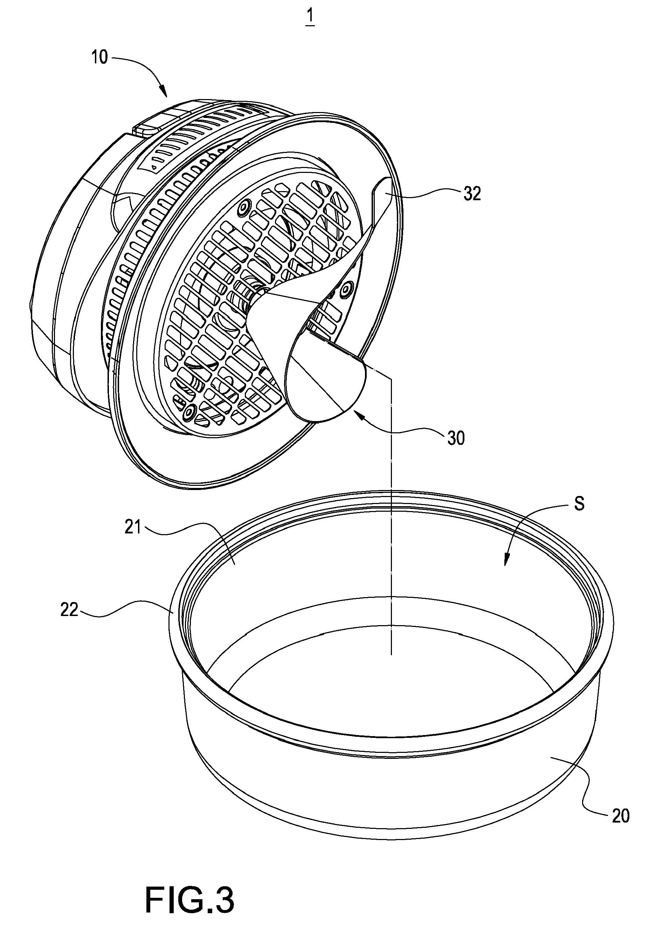

Please refer to FIGS. 2 and 3. In the present embodiment, the distal end of the transmission shaft 143 of the speed-reducing mechanism 14 is connected with a stirring member 30 by means of a nut 40. The free end of the transmission shaft 143 has a positioning section 1431 and an outer thread 1432. The center of the stirring member 30 is provided with a restricting hole 31 and a blade 32 formed around the restricting hole 131. The profile of the restricting hole 31 corresponds to that of the positioning section 1431 of the transmission shaft 143. Thus, after the nut 40 fastens the stirring member 30 to the free end of the transmission shaft 143, the positioning section 1431 of the transmission shaft 143 can drive the restricting hole 31 of the stirring member 30, so that the stirring member 30 can rotate in synchronization with the transmission shaft 143 with its blade 32 stirring the food materials. In this way, the food materials can be heated uniformly.

Please refer to FIGS. 3 and 4. The pot 20 is a hollow cylinder having an accommodating chamber S inside the pot 20 and an opening 21 formed atop the accommodating chamber S. The periphery of the opening 21 is formed with a flange 22 for supporting the cover plate 111 of the cover body 11. After the above-mentioned components of the heating cover 10 are assembled together with the stirring member 30, the heating cover 10 can be put to cover the opening 21 of the pot 20. The depth of the pot 20 allows the stirring member 30 to be put into the accommodating chamber S without hindering the rotating and stirring action of the stirring member 30.

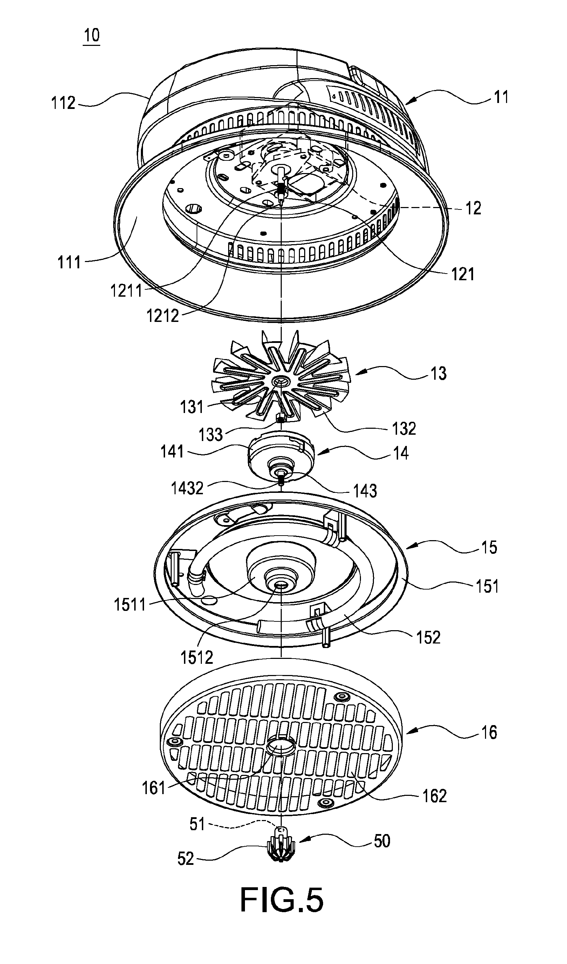

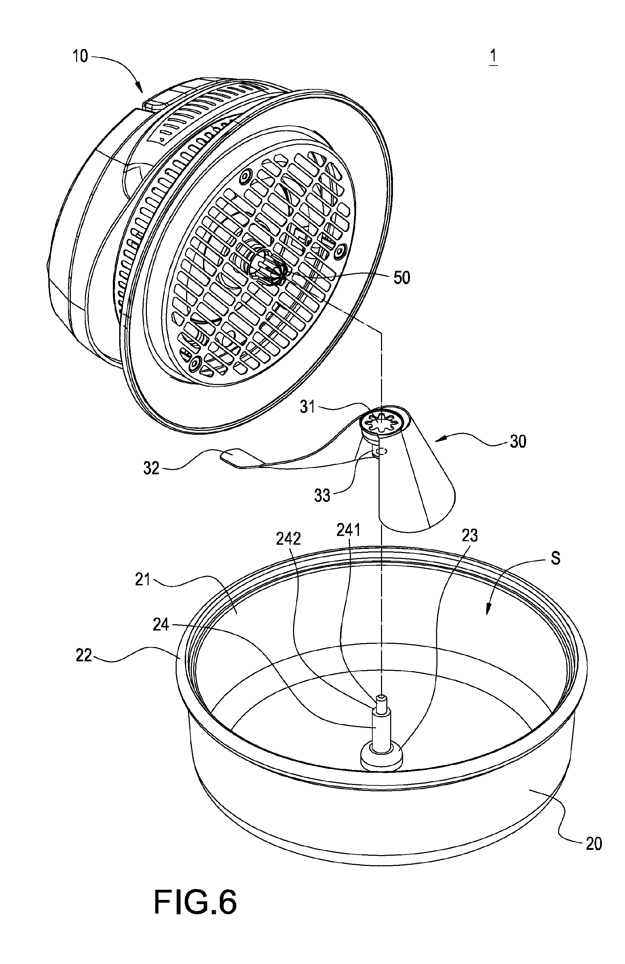

Please refer to FIGS. 5 to 7, which show another embodiment of the present invention. The difference between the present embodiment and the previous embodiment lies in that the stirring member 30 is a separate element and not fixedly connected to the heating cover 10. The advantage of a separate element lies in that it is much easier to clean and exchange the stirring member 30. Since the other components in the previous embodiment are substantially the same as those in the previous embodiment, the description thereof is omitted for clarity.

In the present embodiment, the way of connecting the stirring member 30 and the heating cover 10 is as follows. The free end of the transmission shaft 143 of the speed-reducing mechanism 14 is provided with the outer thread 1422, and the free end is threadedly connected to a coupling member 50. The coupling member has an inner thread hole 51 threadedly engaged with the outer thread 1432 and a driving tooth 52 opposite to the inner thread hole 51. The profile of the driving tooth 52 corresponds to that of the restricting hole 31 of the stirring member 30. By this arrangement, the transmission shaft 143 can drive the coupling member 50 to rotate. Then, the driving tooth 52 of the coupling member 50 can in turn drive the stirring member 30 to rotate accordingly.

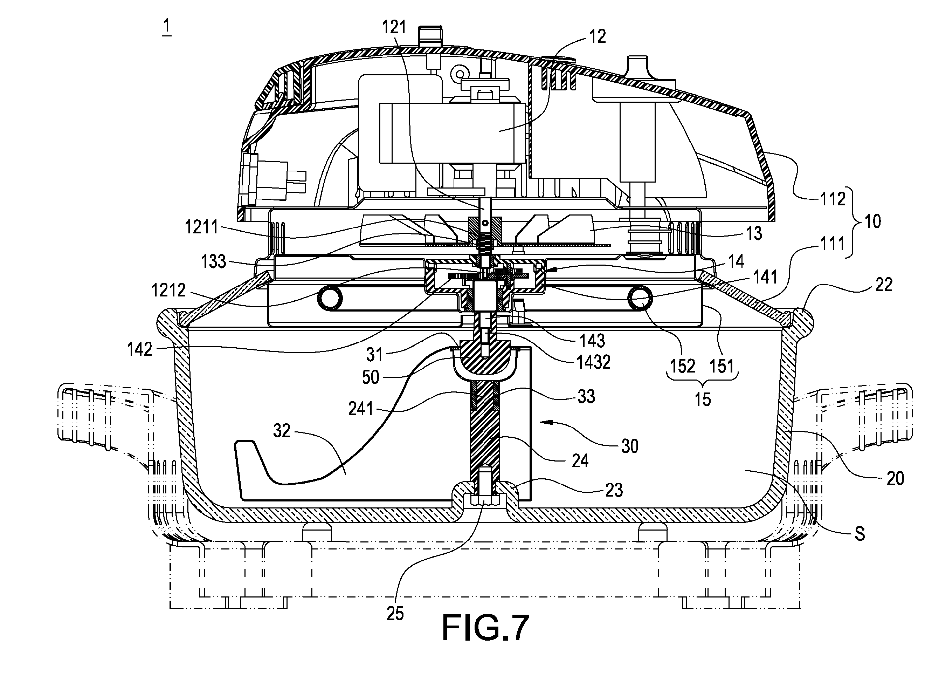

On the other hand, since the stirring member 30 is a separate element, in order to make the stirring member 30 to be driven stably by the driving tooth 52, the center of the bottom surface of the pot 20 is formed with a central post 23 at a position corresponding to that of the coupling member 50. The central post 23 has a through-hole which a positioning rod 24 and a bolt 25 (FIG. 7) penetrate and are connected thereto. The top of the positioning rod 24 is formed with an insertion pin 241 of a reduced diameter. A supporting surface 242 is formed between the insertion pin 241 and the positioning rod 24. The stirring member 30 is formed with a positioning post 33 under the restricting hole 31. The positioning post 33 has a hole into which the insertion slot 231 can be inserted. By this arrangement, the positioning post 33 of the stirring member 30 can be supported on the supporting surface 242 of the positioning rod 24 to thereby rotate stably on the bottom surface of the pot 20. By means of precise design in dimensions, when the stirring member 30 is put on the positioning rod 24 of the pot 20 and the heating cover 10 covers the pot 20, the driving tooth 52 of the coupling member 50 can be inserted into the restricting hole 31 of the stirring member 30 to drive the stirring member 30 to rotate, thereby stirring the food materials in the accommodating chamber S of the pot 20.

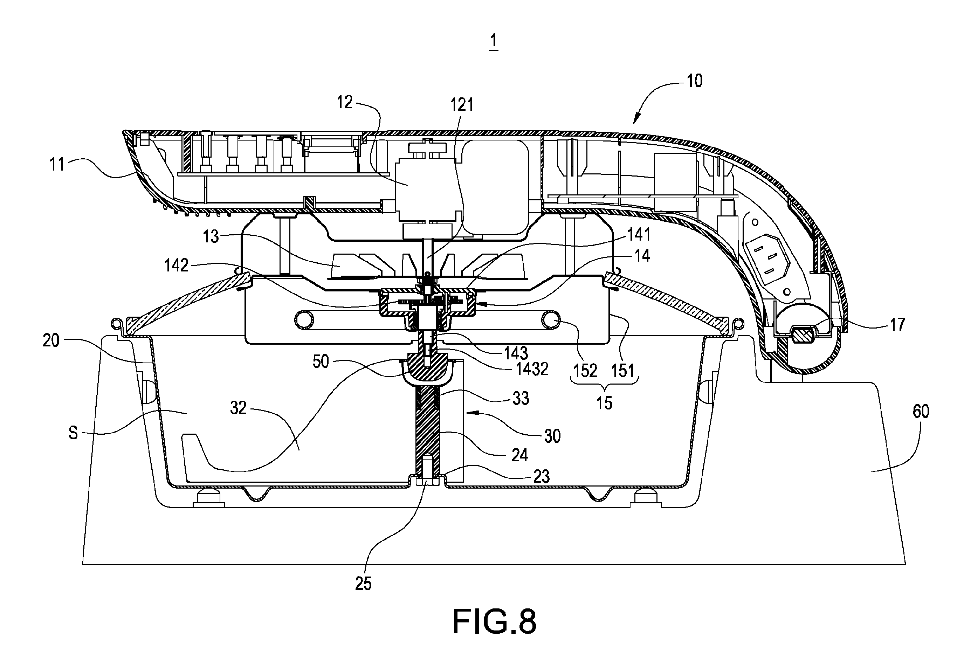

Please refer to FIG. 8, which shows a further embodiment of the present invention. The difference between the present embodiment and the previous two embodiments lies in that the heating cover 10 is connected to one side of a housing 60 by means of a pivot 17, while the pot 20 is supported in the housing 70, thereby forming a whole structure.

Although the present invention has been described with reference to the above-mentioned preferred embodiments, the present invention is not limited thereto and equivalent modifications can be still made to the illustrated embodiments. For example, in the above-mentioned embodiments, the heat-dissipating impeller 13 is provided between the actuator 12 and the speed-reducing mechanism 14. In addition to this arrangement, the heat-dissipating impeller 13 may be provided above the actuator 12 to draw hot air out of the cover body 11, thereby dissipating the heat generated by the actuator 12. The profile of the stirring member 30 can be modified as other forms and even has a plurality of blades. Alternatively, the center of the stirring member 30 protrudes downwards to form a hollow shaft into which the central post 23 on the bottom surface of the pot 20 can be inserted. In this way, the stirring member 30 can be supported directly and rotate stably on the central post 23 of the pot 20.

It should be noted that, although the potato strip is used as an example for the food material in the specification, other small-sized food materials can be also used in the low-oil fryer of the present invention, such as beans, grains of sweet corns, small cubes cut from ham, potato balls, chicken cubes or chips, short sausages, or the like.

According to above, the low-oil fryer and the heating cover thereof according to the present invention really demonstrate industrial applicability, novelty and inventive steps. Further, the structure of the present invention has not been seen in the products of the same kind and let in public use. Thus, the present invention conforms to the requirements for a utility model patent.

## Claims

1. A heating cover (10) of low-oil fryer (1), including:
a cover body (11);
an actuator (12) mounted inside the cover body (11) and having a driving shaft (121);
a heater (15) mounted below the actuator (12), the heater (15) comprising a partitioning disk (151) connected to the cover body (11) and a heating element (152) fixed to the partitioning disk (151); and
a speed-reducing mechanism (14) disposed on the partitioning disk (151), the speed-reducing mechanism (14) comprising a speed-reducing gear set (142) rotatably driven by the driving shaft (121) and a transmission shaft (143) rotatably driven by the speed-reducing gear set (142).

2. The heating cover (10) of low-oil fryer (1) according to claim 1, wherein the heating element (152) is a halogen heating pipe.

3. The heating cover (10) of low-oil fryer (1) according to claim 1, further including a stirring member (30) fixedly connected to the transmission shaft (143) and rotatably driven by the transmission shaft (143).

4. The heating cover (10) of low-oil fryer (1) according to claim 3, wherein a free end of the transmission shaft (143) is formed with a positioning section (1431), and the stirring member (30) has a restricting hole (31) for allowing the positioning section (1431) to be inserted therein.

5. The heating cover (10) of low-oil fryer (1) according to claim 1, further including a coupling member (50) fixedly connected to the transmission shaft (143) and rotatably driven by the transmission shaft (143).

6. The heating cover (10) of low-oil fryer (1) according to claim 5, further including a stirring member (30) connected to the coupling member (50) and rotatably driven by the coupling member (50).

7. The heating cover (10) of low-oil fryer (1) according to claim 6, wherein a free end of the transmission shaft (143) is formed with an outer thread (1432), the coupling member (50) has an inner thread hole (51) threadedly engaged with the outer thread (1432), the coupling member (50) is formed with a driving tooth (52) on a free end away from the inner thread hole (51), the stirring member (30) has a restricting hole (31) for allowing the driving tooth (52) to be inserted therein.

8. A low-oil fryer (1), including:
a pot (20) having an accommodating chamber (S) and an opening (21) formed atop the accommodating chamber (S);
a heating cover (10) covering the opening (21) of the pot (20), the heating cover (10) including:
a cover body (11);
an actuator (12) mounted inside the cover body (11) and having a driving shaft (121);
a heater (15) mounted below the actuator (12), the heater (15) comprising a partitioning disk (151) connected to the cover body (11) and a heating element (152) fixed to the partitioning disk (151); and
a speed-reducing mechanism (14) disposed on the partitioning disk (151), the speed-reducing mechanism (14) comprising a speed-reducing gear set (142) rotatably driven by the driving shaft (121) and a transmission shaft (143) rotatably driven by the speed-reducing gear; and
a stirring member (30) disposed in the accommodating chamber (S) and rotatably driven by the transmission shaft (143).

9. The low-oil fryer (1) according to claim 8, wherein the heating element (152) is a halogen heating pipe.

10. The low-oil fryer (1) according to claim 8, wherein a free end of the transmission shaft (143) is formed with a positioning section (1431), and the stirring member (30) has a restricting hole (31) for allowing the positioning section (1431) to be inserted therein.

11. The low-oil fryer (1) according to claim 8, further including a coupling member (50) fixedly connected between the transmission shaft (143) and the stirring member (30) and rotatably driven by the transmission shaft (143).

12. The low-oil fryer (1) according to claim 11, wherein a free end of the transmission shaft (143) is formed with an outer thread (1432), the coupling member (50) has an inner thread hole (51) threadedly engaged with the outer thread (1432), the coupling member (50) is formed with a driving tooth (52) on a free end away from the inner thread hole (51), the stirring member (30) has a restricting hole (31) for allowing the driving tooth (52) to be inserted therein.

13. The low-oil fryer (1) according to claim 12, wherein a bottom surface of the pot (20) is formed with a central post (23), and the stirring member (30) is rotatably supported on the central post (23).

14. The low-oil fryer (1) according to claim 8, further including a housing (60), the heating cover (10) being pivotally connected to one side of the housing (60), and the pot (20) being supported in the housing (60).
